# EUROPEAN PATENT APPLICATION

(11) **EP 1 207 239 A2**
(43) Date of publication of application: **22.05.2002**
(21) Application number: 01309512.0
(22) Date of filing: 12.11.2001
(51) Int. Cl.: E04B 1/94, E04H 5/10

(54) **Improvements in or relating to fire resistant panels**

(30) Priority: 11.11.2000 GB 0027632
(71) Applicant: Refrigeration Construction Services Limited, Birmingham B11 3RP (GB)
(72) Inventor: Walden, E., c/o Refrigeration Construct. Serv. Ltd, Tyseley, Birmingham B11 3RP (GB)
(74) Representative: Croston, David

(57) **Abstract**

A fire resistant panel, wherein the panel comprises a metal layer, adhesion means on the metal layer, a mechanical interlocking section on the adhesion means and a fire resistant foam section on the mechanical interlocking section.

## Description

The invention relates to improvements in or relating to fire resistant panels.

GB 2297985 (in the name of the applicant), (and which is incorporated by reference), discloses, inter alia, a thermally insulating and fire-resistant panel. The thermally insulating and fire-resistant panel comprises a polyurethane foam core. First and second magnesium oxychloride layers sandwich the core. First and second metal skins are then applied to, respectively, the first and second magnesium oxychloride layers by means of a cement adhesive.

A problem with GB 2297985 is that acidic content of the polyurethane foam eats into the cement adhesive which results in a corresponding loss of adhesion.

Since the polyurethane foam core is flammable, the magnesium oxychloride layers are used to protect the core in a fire. It has been noticed that the magnesium oxychloride layers and the polyurethane foam do not bond well. Another problem with the panel of GB 2297985 is that the magnesium oxychloride layers are logistically hard to manufacture.

An aim of the invention is to provide an improved fire resistant panel.

A further aim of the invention is to provide improvements in or relating to fire resistant panels.

According to a first aspect of the invention there is provided a fire resistant panel, wherein the panel comprises a metal layer, adhesion means on the metal layer, a mechanical interlocking section on the adhesion means and a fire resistant foam section on the mechanical interlocking section.

According to a second aspect of the invention there is provided a thermally insulating and fire resistant panel, wherein the panel comprises a metal layer, adhesion means on the metal layer, a mechanical interlocking section on the adhesion means and a fire resistant foam section on the mechanical interlocking section.

The mechanical interlocking section allows foam to key thereto and thereby improves the bond between the foam section and the metal layer.

The mechanical interlocking section forms a buffer between the foam and the metal layer which prevents acidic chemicals of the foam reacting with the metal layer, so adhesive will continue to work effectively.

The metal may be sheet metal, most preferably sheet steel.

Preferably, the fire resistant foam comprises a phenolic-resin based foam.

The panel may comprise one or more further metal layers, preferably one. In one embodiment first and second metal layers are arranged to sandwich the foam, the second metal layer being adhered to the foam section in the same way that the first metal layer is adhered to the foam section, the first and second layers providing, respectively, an inside and an outside of the panel.

The mechanical interlocking section is preferably a fibrous material and may comprise glass fibre or fabric or the like.

It is known for one panel of the barrier to comprise a tongue section and another panel of the barrier to comprise a groove section, the complimentary tongue and groove sections being engaged. However, the tongue and groove sections can become disengaged in a fire.

Preferably at least one panel of the barrier comprises a tongue section and another panel of the barrier comprises a groove section, the complimentary tongue and groove section being engaged and a mechanical fixing element is positioned through part of the engagement of the tongue and groove sections to prevent disengagement.

In that way there is line path between the joint between the panels. The joint is preferably designed so that the mechanical fixing element is hidden. That has two functions. Firstly, the aesthetics of the panel are improved but secondly, the panel exhibits better fire resistance when the fixing element is hidden because it is not exposed to direct heat. The fixing element, if exposed would act to conduct heat into the panel. The present arrangement demonstrates fire resistance performance of ninety minutes.

According to a third aspect of the invention there is provided a method of making a thermally insulating and fire resistant panel comprising,
providing a metal layer,
applying adhesive on a side of the metal layer,
arranging a mechanical interlocking section on the adhesive on the metal layer, and
applying a fire resistant foam to the mechanical interlocking section side of the metal layer.

Preferably, the method comprises providing a second metal layer, applying further adhesive on a side of the second metal layer, arranging a second mechanical interlocking section on the further adhesive, and applying a fire resistant foam to the mechanical interlocking section side of the second metal layer.

Most preferably, the method comprises arranging the first and second metal layers spaced apart in a mould, the adhesive on the metal layers facing each other, and introducing fire resistant foam into the mould substantially to fill a space between the first and second metal layers.

Preferably, the step of providing a metal layer comprises providing sheet steel. The sheet steel is preferably unprimed on at least one side.

It is known to use foam as an insulating material in a building block.

According to a fourth aspect of the invention there is provided a thermally insulating and fire resistant structural block, wherein the block comprises a fire resistant foam portion, the foam portion being the only stress bearing part of the block.

In that embodiment the panel can be used as a structural member arranged to bear stress in a building, for example, supporting other like members.

Preferably the or each sheet has a fire resistant treatment.

In a preferred embodiment, the phenolic resin based foam comprises a bulk agent, most preferably an inorganic agent such as gypsum or aluminium tri hydroxide. The bulk agent increases density and strength of the foam. Also, such agents do not burn which increases the fire resistance of the panel.

An apparatus is known which applies "touch" adhesive ("touch" adhesive is a type of adhesive which never goes off, e.g. as used in adhesive tape) onto layers prior to application of foam on the layers. The apparatus comprises a conveyor for conveying a metal layer and an applicator adjacent the conveyor, which applies adhesive to the metal layer.

According to a fifth aspect of the invention there is provided an apparatus for applying a mechanical interlocking section to a metal layer, the apparatus comprising means for conveying a metal layer, adhesive application means, means for applying a mechanical interlocking section onto the metal layer, pressing means to press a mechanical interlocking section into the adhesive, and a heating means to cure the adhesive.

The adhesive application means is preferably movable independently relative to the apparatus. Most preferably, the adhesive application means is designed to continue to move when the means for conveying stops to allow the metal sheet to be cut. The adhesive application means is preferably moved to prevent the adhesive setting, and most preferably is returned to the position at which it was when the conveyor stopped prior to the conveyor restart. Most preferably, movement of the adhesive application means is computer controlled.

Preferably, the apparatus further comprises a mounting for a metal supply, a measuring means to measure the length of the steel , and a cutting means to cut the steel into sections.

According to a sixth aspect of the invention there is provided a method of making a part for use in accordance with the first aspect of the invention, comprising,
providing a metal layer,
applying a two-part Poly-Urethane adhesive or the like to a surface of the layer,
applying a glass fibre or the like to the adhesive.

Preferably the step of providing the sheet metal layer comprises providing a steel housing having an unprimed surface and applying adhesive to unprimed surface.

Preferably the method comprises pressing the glass fibre on the adhesive, and most preferably heating the glass fibre on the adhesive to cure it.

According to a seventh aspect of the invention there is provided a method of foaming a panel in accordance with the first aspect of the invention comprising providing a mould of a length and width substantially greater than the depth, arranging the mould so that length and width thereof extend substantially horizontally and introducing foam into the mould midway along the width or length thereof. Preferably the method comprises directing the foam in opposing directions from the midway point of the mould, most preferably towards opposing ends of the mould.

By foaming in a horizontal configuration the foam has less height to travel so it can be active for a lesser period of time. Also the chemical formulation is not so critical.

Loss of foam in the foaming of the fire resistant panel results in a loss of density therein.

It is known for a mould for making fire resistant panels to have vent holes defined therein which are covered with pieces of fabric. The fabric allows gas to escape therethrough and therefore through the holes whilst stopping foam from escaping therethrough.

A problem with the above system is that the fabric is not robust and once it is soiled, it has to be removed and replaced with a fresh piece of fabric.

An aim of the invention is to provide an improved mould for making fire resistant panels.

According to an eighth aspect of the invention there is provided a mould suitable for use in making a fire resistant panel using fire resistant foam, the mould comprising two side rails and two end rails which form a rectangular mould, one side rail having an opening arrangement for injecting foam, at least one of the end rails having one or more vent holes, the vent holes having an integrally formed means arranged to allowing expulsion of gases associated with fire resistant foam therethrough while preventing passage of foam therethrough.

Preferably, means for allowing expulsion of gases and stoppage of foam comprises gauze. Most preferably the vent hole is capped with a plastics material gauze vent cap.

Preferably, the opening arrangement comprises two injection passages, a first passage directed towards the first end rail and a second passage directed towards the second end rail.

Preferably, each of the end rails has one or more vent holes.

In a preferred embodiment there are four vent holes, two at each end. In the preferred embodiment the vent holes are 25-30mm diameter bores.

In one embodiment, vacuum means is applied to the vent holes to assist in removal of gases within the mould.

Once foam has been introduced into a mould and expanded to substantially fill the space between the mould surfaces, it is known to place the mould in a curing press. A known curing press comprises spaced apart horizontal plates and means for maintaining the plates at particular temperatures during curing.

According to a ninth aspect of the invention there is provided a press comprising one or more plate pairs, each plate pair comprising two spaced apart horizontal plates and means for maintaining the upper plate of each pair at a higher temperature and the lower plate of each part at a lower temperature.

The applicant has found that such an arrangement gives rise to improved foam properties.

Phenolic resin based foam is brittle. The applicant has found that where it is used in making a tongue and groove joint, both the tongue and groove sections are delicate. Preferably, the tongue and groove sections are shielded with a metal skin.

The metal skins of the known panel move with respect to each other in a fire, leading to the panel splitting.

According to a tenth aspect of the invention there is provided a thermally insulating and fire resistant panel, wherein the panel comprises first and second metal layers sandwiching a fire resistant foam section, and a connector means comprising an element non-combustible in a fire.

The connector means is conveniently located at at least one end of the panel.

Preferably the non-combustible element means is a metal tie or a plurality of such ties.

According to an eleventh aspect of the invention there is provided a fire door suitable for a food store, wherein the fire door comprises a panel made in accordance with the first aspect of the invention or the second aspect of the invention or any of the consistory clauses relating thereto.

According to a twelfth aspect of the invention there is provided a ceiling panel, wherein the ceiling panel comprises a panel made in accordance with the first aspect of the invention or the second aspect of the invention or any of the consistory clauses relating thereto.

According to a thirteenth aspect of the invention there is provided a thermally insulating and fire resistant barrier, comprising a series of panels made in accordance with the first aspect of the invention or the second aspect of the invention or any of the consistory clauses relating thereto.

According to a fourteenth aspect of the invention, there is provided a fire resistant panel having opposite surfaces and a fire resistant material therebetween, the surfaces each carrying a member extending from the base thereof towards an upper part thereof, the members being joined together so as to secure structurally one surface to the other.

A fire resistant panel will now be described with reference to the accompanying drawings in which,
Figure 1 is a schematic side view of a machine used to make part of a panel in accordance with the invention,
Figure 2 is a plan view of a mould suitable for use in making a panel in accordance with the invention,

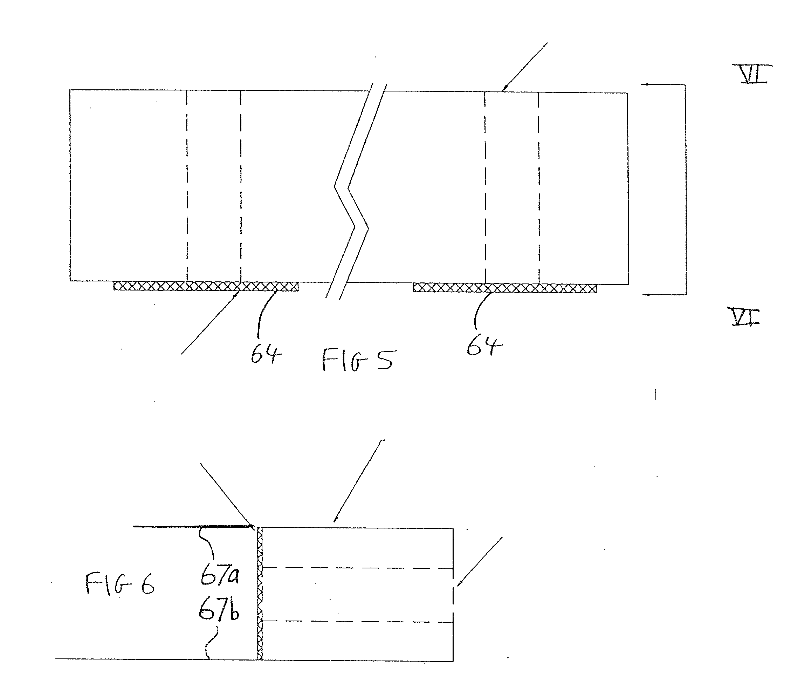

Figures 3 and 4 are plan views which show the mould in use to make a panel in accordance with the invention,
Figure 5 is a plan view showing part of the mould enlarged,
Figure 6 is a side view of the part of the mould of Figure 5 looking in the direction of arrow VI in fig 5,
Figure 6a is a plan view of a vent gauze plug,
Figure 6b is a side view of the plug of Figure 6a,
Figure 7a is a perspective view of another mould,
Figure 7b is a side view of the mould,
Figure 7c is a cross section of a panel made in accordance with the invention,
Figure 8 is a cross section of two panels made in accordance with the invention being connected together,
Figure 8a is a plan view of the arrangement of Figure 8,
Figure 9 is a cross section of two panels made in accordance with the invention shown connected,
Figure 10 is an enlarged view of part of Figure 9,
Figure 11 is a cross section of part of another panel made in accordance with the invention,
Figure 12a is a cross sectional view of a ceiling panel made in accordance with the invention,
Figure 12b is a cross section of two panels made in accordance with the invention shown connected,

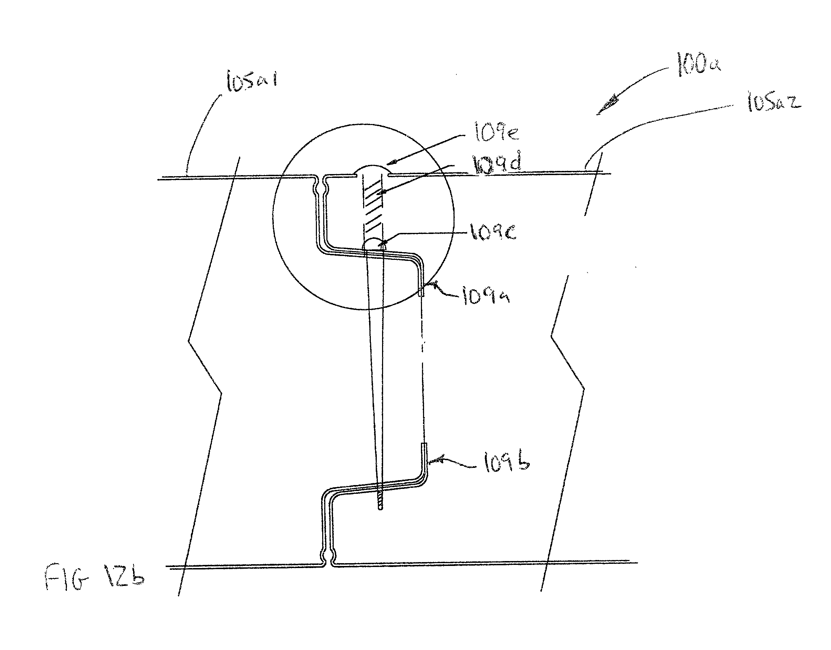

Figure 13 is a front elevation of a wall comprising panels made in accordance with the invention,
Figure 14 is a plan view of the wall of Figure 13,

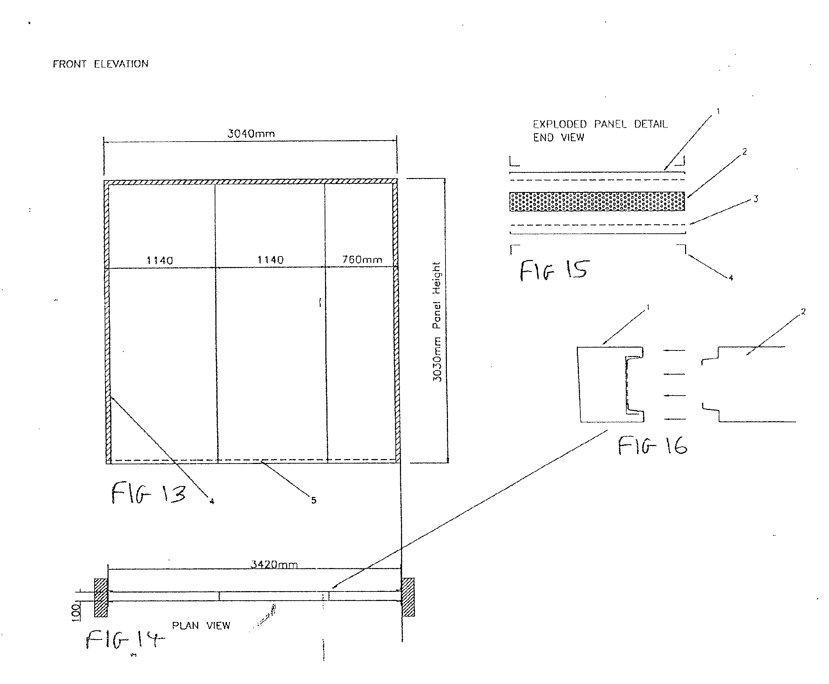

Figure 15 is an exploded end view of the wall of Figure 14,
Figure 16 is a cross section showing panels of the wall being fitted together,
Figures 17 to 19 show a fully insulated, single acting, single leaf, composite doorset.
Figures 20 to 23 show a fully insulated, single acting, single leaf, composite doorset designed to withstand a fire for a greater amount of time than that of figs 17 to 19,
Figures 24 to 28 show a double fire door made in accordance with the invention,
Figures 29 to 32 show another door made in accordance with the invention,
Figures 33 to 42 show a sliding door arrangement made in accordance with the invention,
Figures 43 and 44 show building panels made in accordance with the invention.
Figures 45a, b and c are plan views of different embodiments of metal ties used to secure one face of the panel to the other,
Figures 46 and 47 are plan views of the ties of figure 45b in place on the panel,
Figure 48 is a front elevation of a panel in accordance with the invention,
Figure 49 is a side elevation of the panel of figure 48,
Figures 50 to 52 are side elevations of the panel of figures 48 and 49.

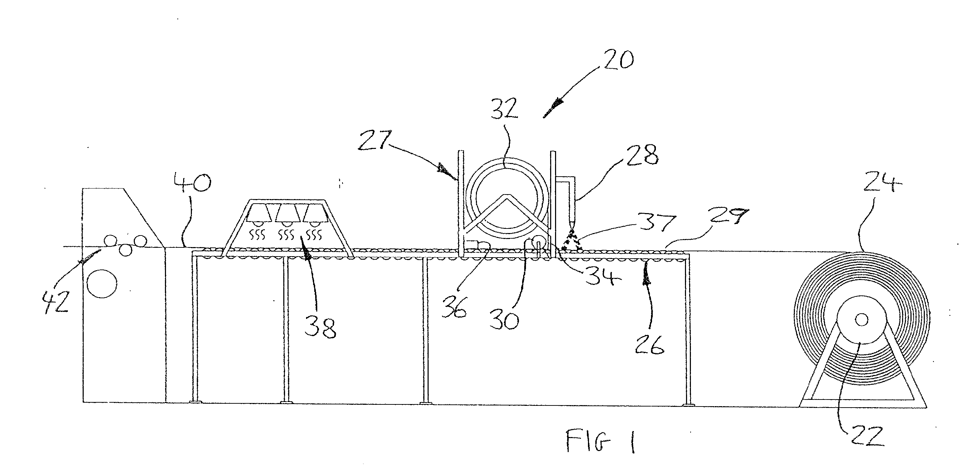

Referring to Figure 1, a gluing machine 20 comprises, from right to left, a steel coil mounting 22, a coil 24 of steel sheet on said mounting 22, and a conveyor 26 along which steel from the coil is arranged to be conveyed.

Still referring to Figure 1, the gluing machine 20 also comprises a unit 27 arranged above the conveyor 26 and moveable along the conveyor.

The unit 27 comprises a spray gun 28, a pinch roller 30, a glass fibre roll mounting 32, a roll of glass fibre 34 on the roll mounting 32, and a press in the form of an air piston 36. The unit 27 is moveably controlled by a computer (not shown).

The spray gun 28 is in communication with a supply (not shown) of both parts of a two part liquid adhesive such as Poly Urethane adhesive. Use of such a two liquid part allows setting when the parts contact in the spray nozzle.

Glass fibre from the roll of glass fibre 34 is trailed through a space defined by the steel sheet 40 on the conveyor 26 and the pinch roller 30. The pinch roller 30 is adjustable to allow easier insertion of the glass fibre 34 through the space between the steel sheet and the pinch roller 30 as well as different adhesive 37 and glass fibre 34 thickness to be applied.

The gluing machine 20 also comprises three heat lamps 38 which are arranged above the conveyor 26 downstream of the unit 27.

In use , the conveyor 26 conveys a continuous steel sheet 29 from the steel coil 24 along its length. The upper surface (as shown in Figure 1) of the continuous steel sheet 29 is unprimed.

The spray gun 28 sprays the two part Poly Urethane adhesive 37 on to an upper surface of the steel sheet. The pinch roller 30 applies glass fibre onto the adhesive 37. The air piston 36 presses the fabric onto the adhesive 37.

The three heat lamps 38 cure the adhesive 37 to set the glass fibre in place.

When the machine stops, to allow cutting of the steel sheet, the piston is moved to the right in figure 1. The piston is moved back to substantially the position it was in prior to the machine stopping before it is re-started. It is computer controlled and its movement is triggered by start and finish of cutting. The purpose of moving the piston is to stop glue set whilst the machine is stationery.

After treatment with adhesive 37 and glass fibre 34, the steel sheet 40 is passed through a measuring and cutting zone 42. The sheet is then cut in the measuring and cutting zone 42 according to the length line. Once the treated steel sheet is cut it is ready for use as a substrate in the moulding of a panel.

It will be appreciated that adhering the glass fibre 34 to the sheet provides a mechanical key which later assists in bonding the foam to the sheet 40.

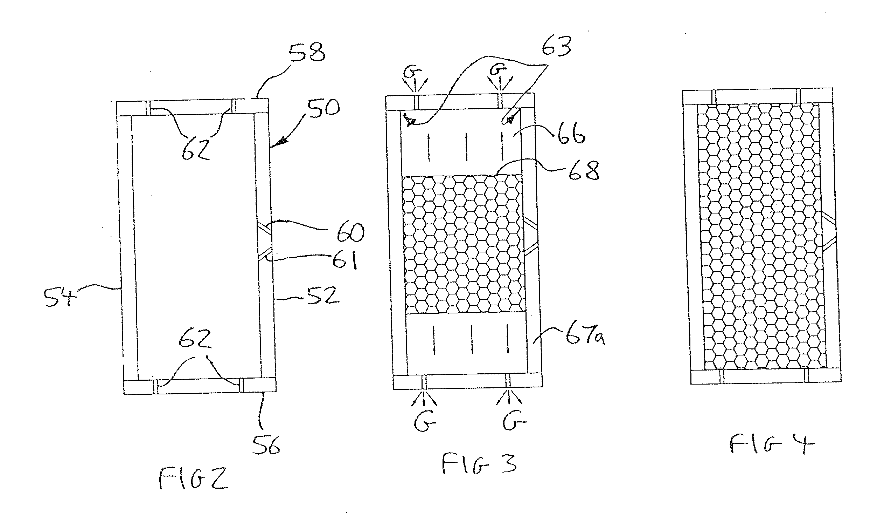

Referring to Figure 2, a mould 50 for forming a panel comprises a first side rail 52, a second side rail 54, a first end rail 56 and a second end rail 58.

The first side rail 52 comprises a foam injection zone about midway along the length thereof. The foam injection zone consists of first and second bores 60, 61, which are oriented towards respectively the first end rail 56 and the second end rail 58. The midway positioning and orientation assists in the foaming process by encouraging a uniform foam density.

The first end rail 56 and the second end rail 58 each have a vent arrangement in the form of two vent holes 62 defined thereon. The vent holes 62 are in the form of bores, of 25mm -30mm diameter.

In assembly of the mould 50, the rails 52, 54, 56 and 58 are arranged in rectangular fashion as shown. The vent holes 62 are consequently arranged towards inner corners 63 of the constructed mould 50.

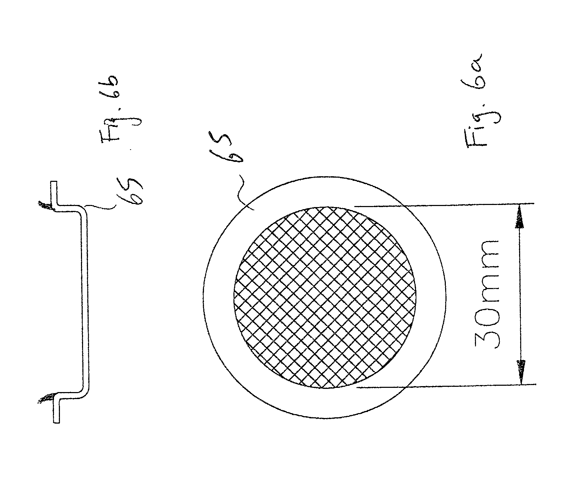

Referring now to Figures 5 and 6, each end rail 56, 58 comprises a gauze material 64 such as mutton cloth arranged over an inner end of the vent holes 62 defined therein. Alternatively, an integrally formed permanent gauze-like material may be fitted to the mould 50. A further alternative is shown in figures 6a and 6b. A plastic gauze vent plug 65 is arranged on the inner end of the vent holes 62. When the foam material is moulded and the mould removed, the vent plug forms part of the moulded article.

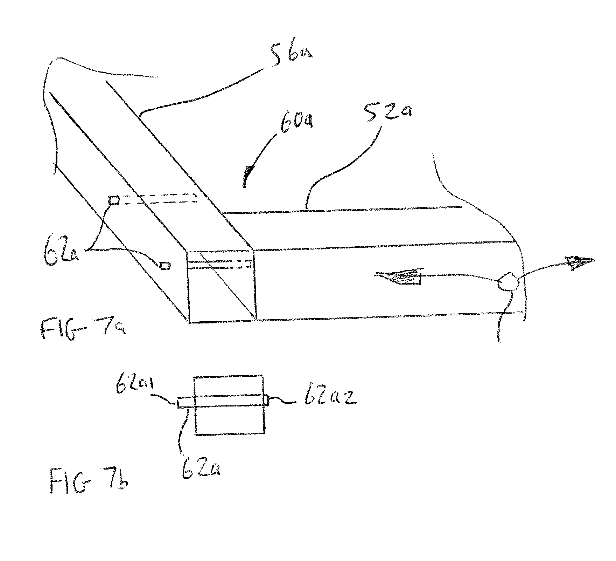

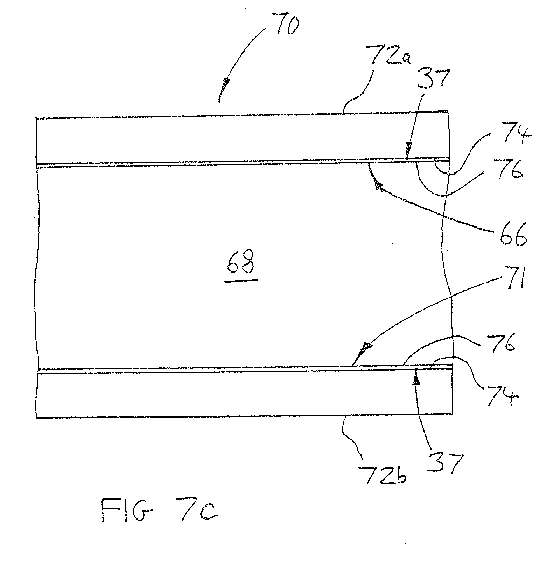

Referring back to figure 3, the first and second substrates formed from the above process (only the first of which is shown in Figure 3 and is denoted by the reference numeral 66 (the second is shown in Figure 7c) are arranged on the mould. The first and second substrates lie parallel with respectively a top surface 67a and a bottom surface 67b of the end rails 56, 58. The glass fibre on the substrate 66 is facing outwardly in Figure 3. The glass fibre on the other substrate would face into the page in Figure 3. The first and second substrates 66,71 are fixed in place while the foaming operation takes place.

Referring to figure 7a, a mould 52a comprises side rails 52a and end rails 56a. The end rails 56a are of box section (see side view of figure 7b). Each end rail 56a has a plurality of spaced apart tubes 62a (which in the particular embodiment shown are of circular cross section). The tubes 62a lie roughly horizontally, approximately mid way up the height of the end rail 56a, and extend from an end 62a1 outside the end rail 56a to an end 62a2 inside the mould cavity. The geometry of the tubes (which are not impaired along their path) is such that the foam begins to set as foam approaches the outside end 62a1 of the tubes 62a. Consequently, the foam emerges (if indeed it does emerge) from the ends 62a1 slowly and in only a small quantity.

Looking at Figure 7c, it can be seen that each of the substrates 66, 71 made in accordance with the method described above comprises a steel sheet 72 having an inside surface 74 covered with adhesive 37 and a glass fibre 34 on the adhesive.

In order to maintain a uniform density of foam in the panel, first the volume is calculated. The requisite amount of foam is then introduced through the bores 60, 61. Foam introduction is stopped at a pre-determined point and the foam then works within the mould expanding towards end rails 56, 58 to fill the mould. After the cavity is filled and the gauze has been contacted by the foam, the foam continues to work for some time. Treatment is such that the foam achieves a normal density of 1100kg/metre cubed.

It will be appreciated that the gauze prevents foam loss (thereby maintaining density).

A Press (not shown) comprises a series of plates. The plates are arranged in pairs which are horizontally arranged, parallel and spaced apart. An upper plate of each pair is arranged to be at a hot temperature, a lower plate of each pair is arranged to be at a lower temperature. A plurality of Moulds 50 are horizontally loaded into the press, each mould being associated with a pair of plates, so that the first substrate lies adjacent a hot temperature plate and the second substrate lies adjacent a lower temperature plate. The applicant has found that improved foam characteristics result when the upper substrate of a panel is maintained at a higher temperature than the lower substrate.

First and second hoses (not shown) connected to a foam supply (not shown) are positioned respectively in the first and second bores 60, 61. Phenolic resin based foam is then injected into the mould 50.

The foam comprises a bulking agent. Bulking agents envisaged are Magnesium Oxide, China Clay, Gypsum, Aluminium Trihydroxide which will not combust. After injection has commenced, as shown in Figure 3, expanding foam starts to push air and other gases G out through gauze material 64 and vent holes 62.

Due to the arrangement, substantially all gases are expelled through the gauze material 64 as the expanding foam contacts the gauze material. Once foam contacts the gauze 64, it gels and blocks the holes defined by the gauze to effectively seal the vent holes 62. The foam continues expanding for a short time after the foam contacts the gauze 64, but once the vent holes 62 are sealed foam cannot escape, leading to an increase in the density of the foam. Eventually, the foam sets in the mould.

At a predetermined time after the foam has set, a panel 70 is removed from mould 50.

Referring to Figure 7c, the panel 70 comprises a foam core 68 between first substrate 66 and second substrate 71.

The panel 70 is then installed in part of a structure, for example, as part of a wall of a cold food store.

In a fire, the steel sheets 72 expand, the adhesive 37 burns and the steel sheets release themselves from the foam 68. However the glass fibre 34 foamed into the surface of the foam remains in place to strengthen the surface of the foam adjacent the first and second sheets 72. In that way, the surface of the separated foam maintains strength and shape when it is delaminated from metal.

Eventual decay of the foam within the panel will occur after a fire has burnt at least one hour. It will be appreciated that the slow and uniform decay in a fire tends to preserve the structure in a fire for longer.

The phenolic resin based foam gives off little smoke relative to other known fillers such as polyurethane. It's by-products are mainly CO2 + WATER (both of which are non-toxic) at high temperature.

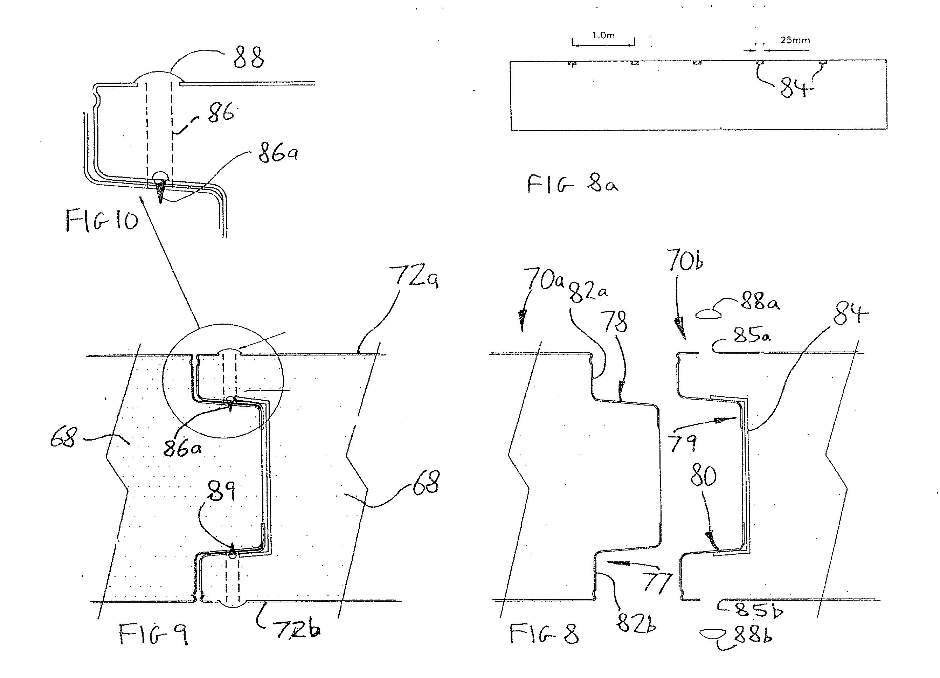

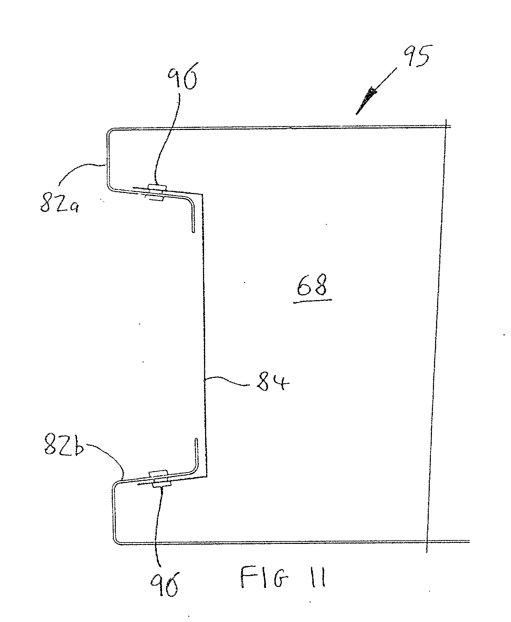

In figures 8 to 10, a joint between two panels 70 is shown.

The panels 70a and 70b are substantially the same. Referring to figure 8 each panel 70a, 70b has a first end 77 and a second end 79. The first end 77 has a tongue 78. The second end 79, opposite the first end 77, has a groove 80.

The foam in the region of the tongue 78 and groove 80 is somewhat fragile. Therefore, metal sheet extensions 82a, 82b extend from the ends of the metal sheets 72 to protect all of the corners of the foam in the tongue 78 and groove 80 regions. The metal sheet extensions 82a, 82b are integral to their respective sheet. To connect the two sheets 72a and 72b, a bridging plate 84 is arranged between the metal sheet extensions 82a, 82b; in this case shown on the groove 80. The bridging plate 84 is ideally arranged against inner surfaces of the metal sheet extensions 82a, 82b prior to foaming of the panel. Further bridging plates 84 are spaced at 2m Ctrs. It will be appreciated the plates 84 are designed to hold the inner and outer skin 72a, 72b together in a fire.

Apertures 85a, 85b are provided in respectively the skins 72a and 72b. Bores 86 are provided through the foam as shown in figure 10.

Referring to figure 8, two panels 70a and 70b are placed end to end so that the tongue section 80 and groove section 82 are engaged. A self drilling steel screw 86a is inserted through the aperture 85 into the bore 86. The screw 86a is then fastened through metal sheet extension 82a of the groove 80 and the tongue 78. The process is repeated by fixing another screw 89 through aperture 85b.

The self drilling steel screws 86a, 89 are fixed at 500mm Ctrs.

A bung 88a is arranged in the aperture 85a over the head of the screw 86a. The bung 88a is of plastics material.

The process is then repeated with a second bung 88b over the head of the screw 89.

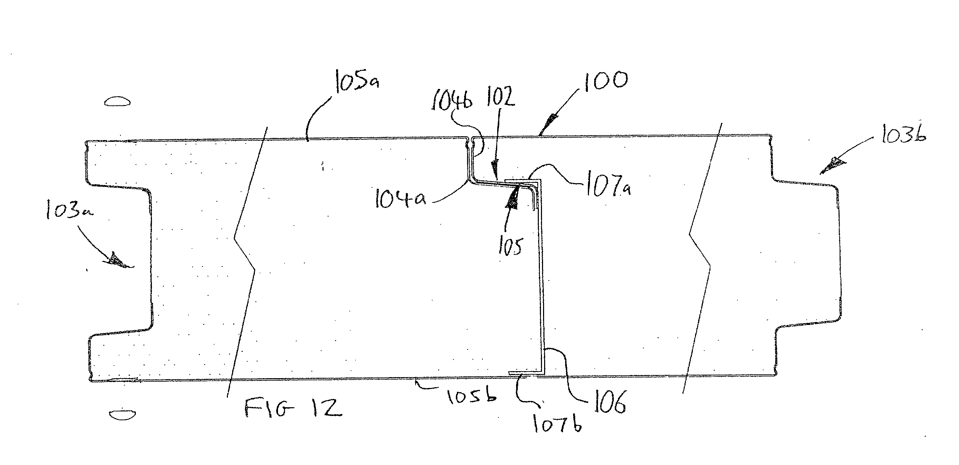

In another embodiment of the invention shown in figure 11, another panel 95 made in accordance with the invention comprises a bridging plate 84 pop riveted with two steel pop rivets 96 to metal sheet extensions 82a, 82b. Such an arrangement prevents the skins coming apart under stress.

In Figure 12, a panel 100 comprises an integral joint 102. The integral joint 102 is remote from tongue and groove sections 103a, 103b. The joint comprises further metal sheet extensions 104a, 104b which extend from one skin 105a into the foam within the panel 100 towards the second skin 105b. The one skin 105a is designed as an external skin. The second skin 105b is an internal one.

The further metal sheet extensions 104a, 104b are s-shaped. The central sections 105 of the s-shaped extensions lies approximately parallel to the one skin 105a. A u-shaped bridging plate 106 has first and second side arms 107a, 107b. The first side arm 107a is positioned on the central section 105 of the metal sheet extensions 104a, 104b and bridges to the second skin 105b, where the second side arm 107b lies parallel to, and against the second skin 105b. The second side arm 107b of the plate 106 is secured in place by fire retardant glue, or alternatively by pop rivets (not shown).

The panel 100 is designed for use in a ceiling.

The above arrangement allows an increased surface area of adhesion between the first metal skin and the foam.

**Referring to Figure Z, another panel 100a comprising two parts is made. Each part of the panel has a first skin 105a1 and a second skin 105a2. Ends 109a and 109b are "hidden" within the panel. The ends 109a and 109b are connected by a single self tapping screw 109c or the like. This fastens the inner and outer skins together. Fire mastic 109d can then be introduced in a cavity above the screw and the cavity can be capped by a plastics bung 109e.**
13 to 16, a fire wall made in accordance with the invention comprises panels 70.

Each panel 70 comprises;
1. 0.55mm Galvanised mild steel with a PVF2 Coating.
2. Core:
   Density: 110 kg/m 3
   Fixing: Bonded to steel face using adhesive primal MC76
3. Surfacing C-Gloss tissue
   Thickness: 0.25mm
   Weight: g/m2 30
4. .55mm Galvanised Mild Steel Angle
   50mm x 50mm to All Sides
   Stalvatite Finish
5. 0.55mm Galvanised Mild Steel Channel
   40mm x 100mm
   Stalvatite Finish
Item 1 can be finished in PVF2, Stalvatite or Stainless Steel

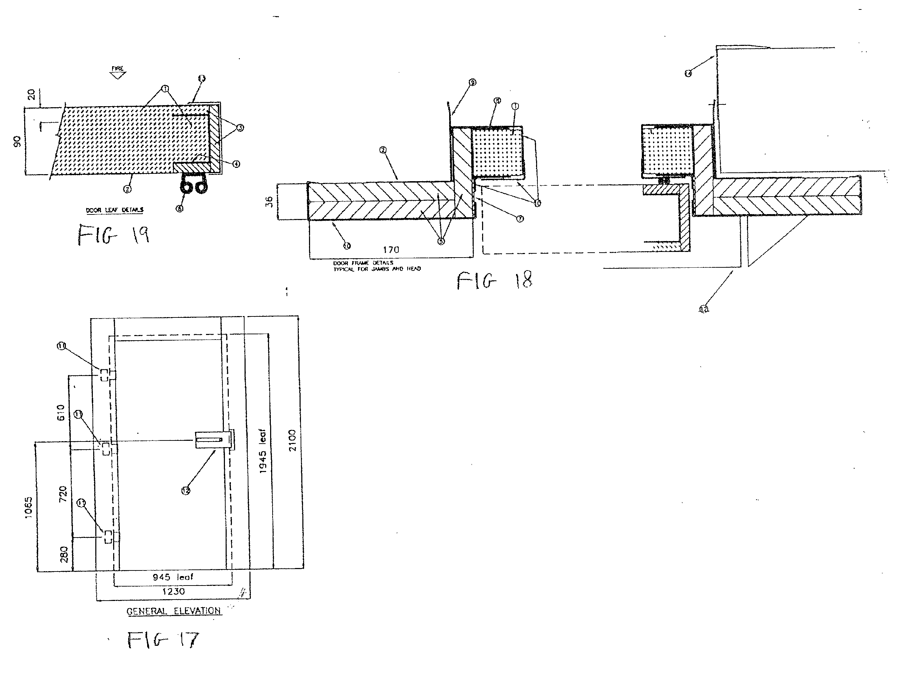

Referring to Figures 17 to 19, a fully insulated, single acting, single leaf, composite doorset 110 made in accordance with the invention comprises the following,
1. Core
   Material: Filled Phenolic resin based Foam
   Density: 110 kg/m3
2. Panel Facing Sheets
   Type: White Foodsafe Metal
   Material: Galvanised mild steel with a Stelvetite finish
   Thickness: 0.55mm
3. Minerit Board
   Material: Lightweight calcim silicate based board
   Density: 1100 kg/m3 (nominal)
   Thickness: 12mm (each board)
   Fixing: Boards bonded together using Polyvinyl Acetate (PVA) adhesive
4. Perimeter channel framework
   Material: Galvanised mild steel
   Thickness: 2mm
   Size: web (66mm) flange (50mm)
   Fixing: framework welded at corners
5. Minerit Board
   Material: Lightweight calcim silicate based board
   Density: 1650 kg/m3 (nominal)
   Thickness: 18mm (each board)
   Fixing: Boards bonded together using Polyvinyl Acetate (PVA) adhesive
6. Rubber Gasket
   Material: Neoprene
   Overall size: 40mm side x 30mm deep
   Fixing: Fitted along head and vertical edges using 4mm diameter steel screws into door leaf through steel clamping plates
7. Intumescent Seal
   Type: GR
   Material: Graphite based
   Supplied size: 40mm x 2mm
   Fixing: Self adhesive fixed
8. Perimeter channel framework
   Material: Galvanised mild steel
   Thickness: 2mm
   Size: web (50mm) flange (40mm)
9. Copping (Lining)
   Material: Stainless Steel
   Thickness: 1.2mm
   Fixing: Screwed into minerit board
10. Copping (fire side)
   Material: Stainless Steel
   Thickness: 1.2mm
   Fixing: Friction fitted
11. Hinges
   Type: 9810/5280
   Material: Stainless Steel
   Size: Bracket to door frame 3 No 7mm diameter steel nuts and bolts through The door leaf 3 No steel screws
12. Spring loaded catch
   Type: Trimark
   Material: Steel
   Fitting: A central catch fitted within door leaf edge engaged into a latch casing
13. Odd Leg Channel
   Material: 1mm Stainless Steel
   Size: 40 x 81 x 15
14. Stainless steel door linings
   Size: to suit blockwork/panel
   Fixing: Steel Pop rivited into item 9 300mm ctrs

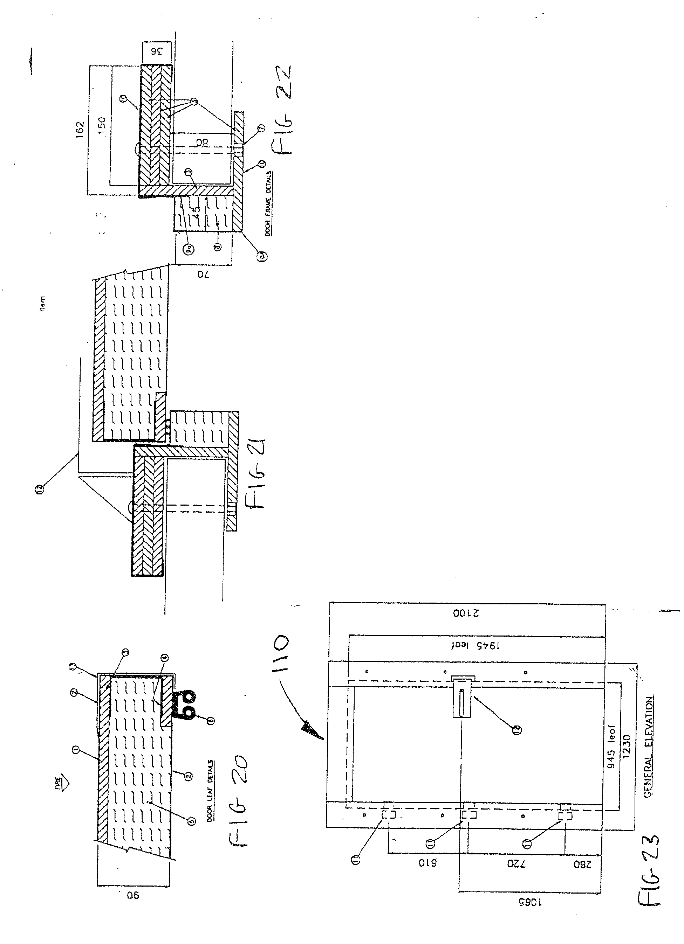

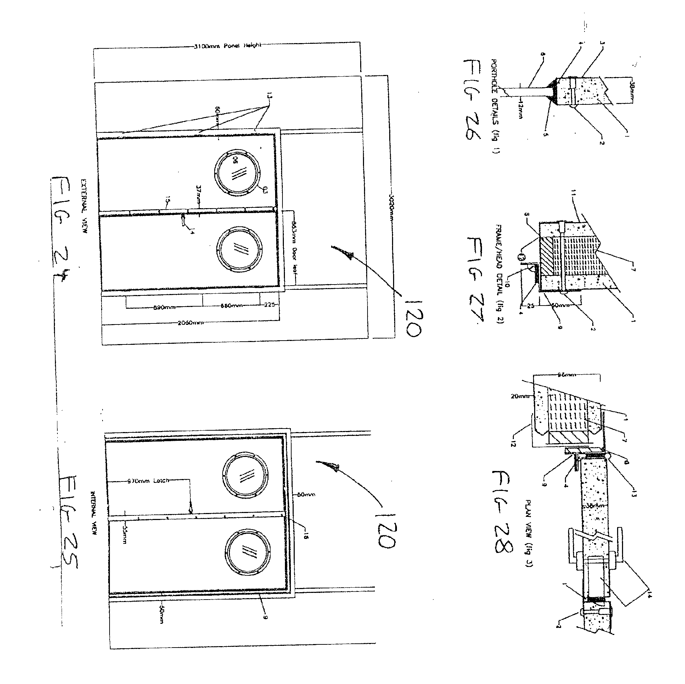

Referring to Figures 20 to 23, another fully insulated, single acting, single leaf, composite doorset 110 made in accordance with the invention comprises the following,
1. Minerit Board
   Material: Lightweight calcim silicate based board
   Density: 1100 kg/m3 (nominal)
   Thickness: 12mm (each board)
   Fixing: Boards bonded together using Polyvinyl Acetate (PVA) adhesive
2. Panel facing sheets
   Type: White Foodsafe Metal
   Material: Galvanised mild steel with a Stelveltite finish
   Thickness: 0.55mm
3. Minerit Board
   Material: Lightweight calcim silicate based board
   Density: 1100kg/m3 (nominal)
   Thickness: 12mm (each board)
   Fixing: Boards bonded together using Polyvinyl Acetate (PVA) adhesive
4. Perimeter channel framework
   Material: Galvanised mild steel
   Thickness: 2mm
   Size: web (66mm) flange (50mm)
   Fixing: framework welded at corners
5. Core
   Density: 130kg/rh (Stated)
   Fixing: Foam was injection moulded and bonded itself to the adjacent facings (Item 1)
6. Rubber Gasket
   Material: Neoprene
   Overall Size: 40mm wide x 30mm deep
   Fixing: Fitted along head and vertical edges using 4mm diameter steel screws into door lead through steel clamping plates
7. Clamping Bolts
   Material: Mild Steel
   Overall Size: 8mm Diameter
   Fitting: Bolts with nuts welded to door frame 600mm centres
8. Core
   Density: 130 kg/rh (Stated)
   Fixing: Foam was injection moulded and bonded itself to the adjacent facings (Item 1)
9a. Type: GR
   Material: Graphite based
   Supplied size: 60mm x 2mm
   Fixing: Self adhesive fixed
10. Copping (fire side)
   Material: Stainless Steel
   Thickness: 1.2mm
   Fixing: Friction fitted
10A. Copping
   Material: Stainless Steel
   Thickness: 2.0mm
   Fixing: Steel Pops
11. Hinges
   Type: 9810/5280
   Material: Stainless Steel
   Size: Bracket to door frame 3 No 7mm diameter steel nuts and bolts through Door frame
      Bracket to door leaf 3 No steel screws
12. Spring loaded catch
   Type: Trimark
   Material: Steel
   Fitting: A central catch fitted within door leaf edge engaged into a latch casing

Referring to Figures 24 to 28, a double fire door 120 made in accordance with the invention comprises the following,
1: Inner facing to core
   Type: Grace Construction Products
   Density: 615kg/m3
   Fixing: Bonded to steel facings using adhesive reference Primal MC76
2: Clamping Bolts
   Material:
      I) Pan head bolt: Zinc plated steel
      II) Sleeve nut: Galvanised steel
   Size: M6 x 35mm long
3: Glazing Frame
   Material: Mild steel
   Thickness: 1.2mm
   Overall size: 528mm Diameter
4: Intumescent Seal
   Material: Graphite based
   Size: 26mm x 5mm
   Fixing method: Self Adhesive
5: Glazing Mastic
   Reference: FR Acrylic fire stop low smoke
      Halogen free
      Intumescent Mastic
6: Glass Unit
   References:
      I) Glass unit laminated with an interlayer
      II) Non fire side
      III) Fire side glass clear float glass pane
   Thickness
   O/a glass unit: 12mm
   Ceramic glass pane: 5mm
   Float glass pane: 6mm
   Interlayer: 1mm
7: Core
   Material: CFC free insulation foam
   Density: 42kg/m3
   Fixing method: Foam was injection applied and bonded itself to adjacent facings
8: Minaret Board
   Material: Calcium silicate based board
   Density: 1100kg/m3
   Thickness: 5mm
9: Profiled plates
   Material: stainless steel
   Thickness: 2mm
   Sizes: See fig 2 & 3
   Fixing method:
      I) Profile together Welds
      II) Jambs & head Welded camera
      III) Portion panels Clamping bolts
10: Door Seal
   Reference: Brown bat wing gasket
   Material: PVC based
   Size: 15mm x 15mm
   Fitting: Along jambs & head
   Fixing method: Self adhesive
11. Facing sheets
   Type: White foodsafe metal
   Material: Galvanised mild steel with a stelvetite
   Thickness: .55mm
12. Profiled Plate
   Material: stainless steel
   Thickness: 1.2mm
   Leg size: 52mm x 61mm
   Fixing method
      I) Jamba to head Steel rivets of corners
      II) To partition panels Clamping bolts
13. Hinges
   Type: lift off hinges
   Reference: 372261601
   Code no: 7225
   Material: Galvanised mild steel
   Size: 96mm long blades
   Quantity: 3 no hinges per door leaf
      I) Type: Countersunk head screws
      II) Material: Mild steel
      III) Size: 6mm diameter x 16mm long
      IV) Quantity: 3 no screws per blade
14: Lock/lever set
   Reference:
      I) Lock: 1498-50
      II) Lever handle set: 640
   Code no:
      I) Lock: 469229-623-013
      II) Lever handle set: 470022-512-013
   Material:
      I) Lock: Mild steel
      II) Lever handle set: Stainless steel
   Size:
      I) Latch foreplate: 23mm x 220mm
      II) Lever handles: 100mm long
15: Flat plate
   Material: Stainless steel
   Thickness: 3mm
   Size: 50mm wide x height of leaf
   Fixing: Clamping bolts at 3300mm ctrs to passive lead
16: Top & Bottom surface bolts
   Size:
      I) Casing 30mm x 25mm x 80mm long
      II) Bolt 10mm Diameter

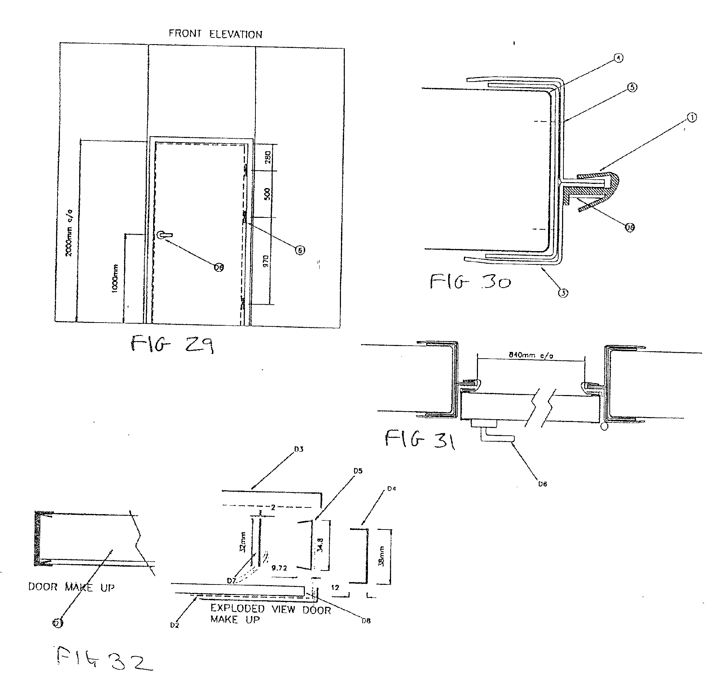

Referring to Figures 29 to 31, a personal door fire door 130 made in accordance with the invention comprises the following,
Door Blade Details
D1: Core: Pyro-foam Modified Phenolic foam
   Density: 110 kg/m3

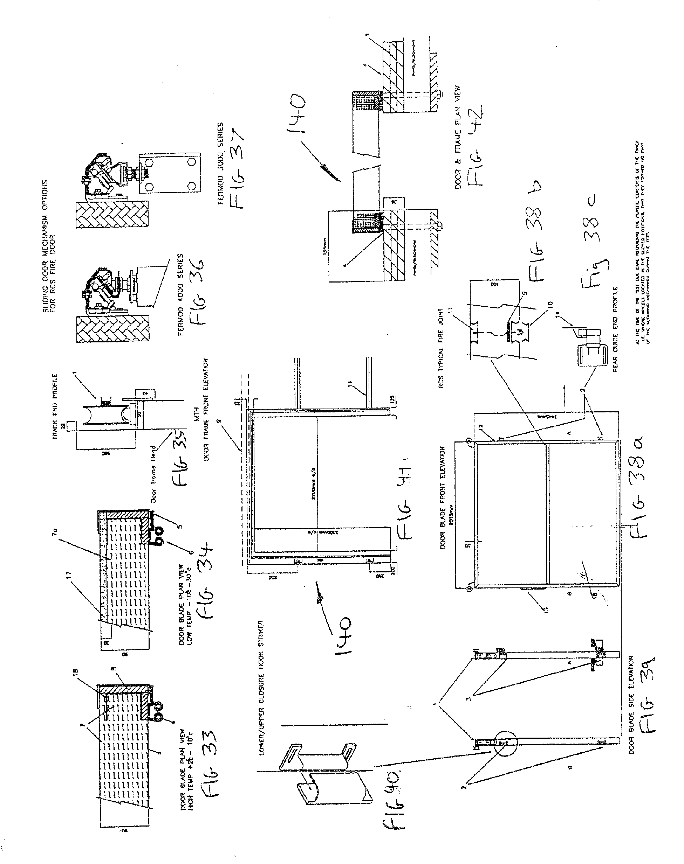

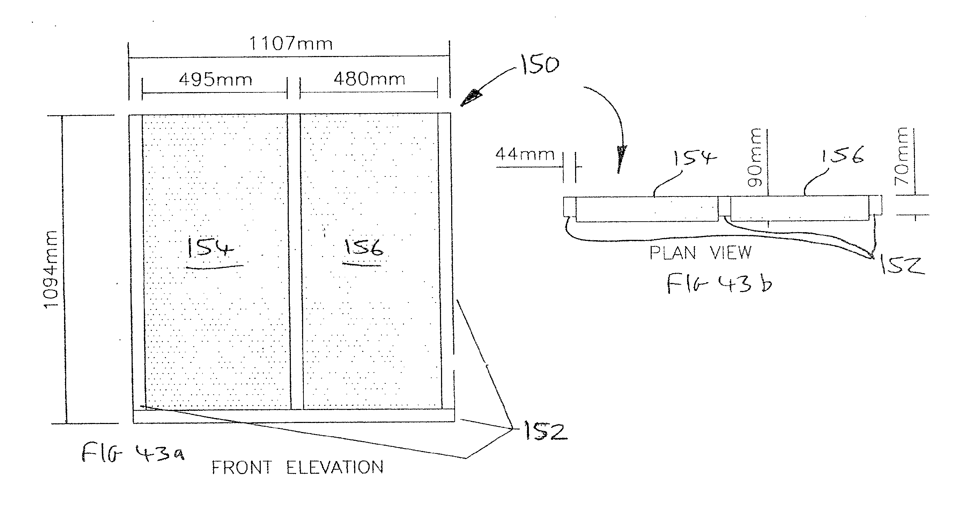

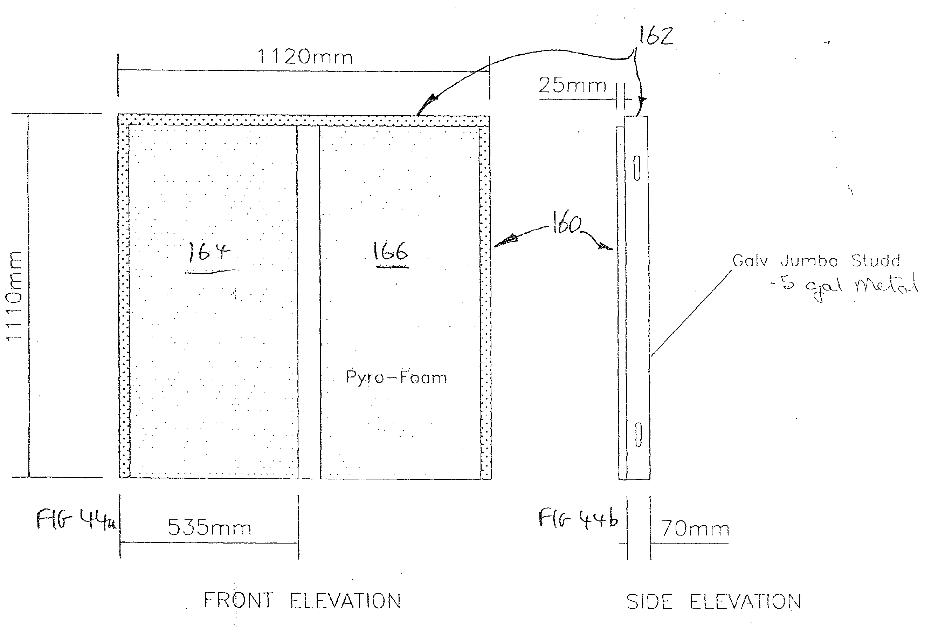

Referring to Figures 32 to 42, a sliding fire door 140 made in accordance with the invention comprises the following,
1. Top door roller guides
2. Closure hook/striker (Stainless steel)
3. Rear guide register (Stainless steel)
4. 18g stainless steel channel around door frame 5. 40mm x 2mm intumescent fire strip (GR Graphite based) self adhesive fixing
6. Rubber gasket
7. Filled phenolic foam 110kg/m3 density (filler super fine white)
8. Glasroc S fire board 15mm each board
9. Stainless Steel door track gear
10. Pre coated white foodsafe metal 0.55mm thick knock in strip
11. Galvanised mild steel 0.55mm thick pop riveted to 300mm centres
12. 3mm thick stainless steel door channel
13. Exterior door handle
14. Stainless steel rear track
15. White foodsafe metal 0.555mm thick
16. Stainless steel 1mm thick door linings to suit thickness of panel
17. Magnesium Oxychloride 30mm thick 450kg/m3 or Pyrofoam™
18. Perimeter channel framework, 2mm thick
   Web (66mm) Flange (50mm)

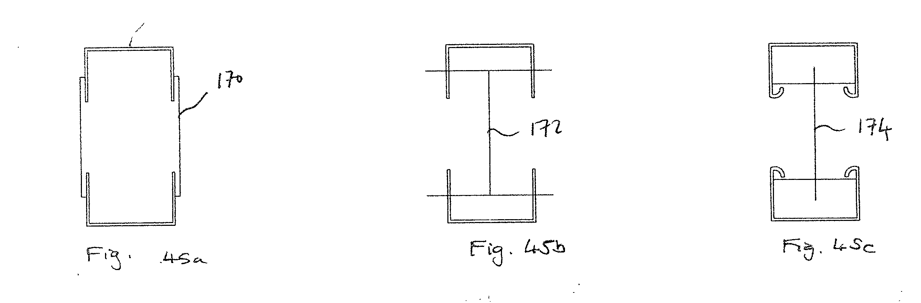

Referring to Figure 43, a building panel 150 comprises a timber frame 152 having a foam infill at 154 and 156.

Referring to Figure 44, another building panel 160 comprises a metal frame 162 having foam infill at 164 and 166.

Building panels 150, 160 may have thin sheets applied to front and back of panels as defined in figures 43a and 44a. It should be noted that such sheets are substantially aesthetic and ergonomic (to provide a flat surface) rather than to bear stress applied to the panel 150, 160 structures. The panels are structurally sound without surface reinforcements and also resist racking movements.

Ties (like butterfly ties used in connecting inner and outer walls of a building) are arranged between the inner and outer walls of the building block. The ties are used instead of structural members used in the prior art to provide vertical strength. Use of the ties in preference to structural members can reduce the K value (thermal efficiency) by up to 30%. Ties are non-combustible and non-conductive.

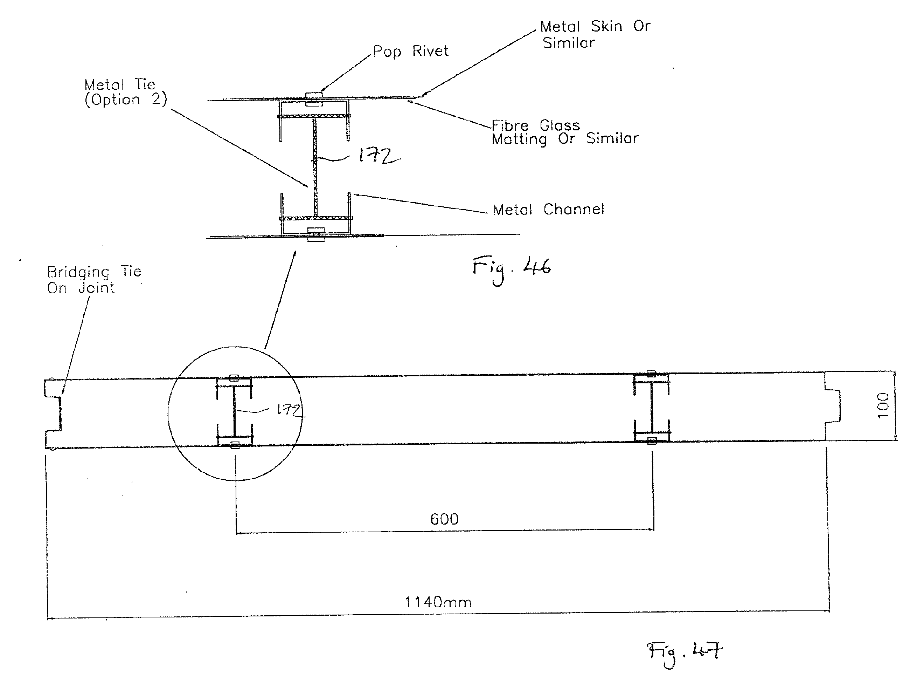

Examples of metal ties 170, 172, 174 are shown respectively in figures 45a, b, b, 46 and 47. Figures 46 and 47 illustrate the ties 172 joining the opposite faces of a panel in accordance with the invention.

Figure 48 is an elevation of a panel 180 in accordance with the invention including metal channels 182 which are riveted to the metal sheet by rivets 184.

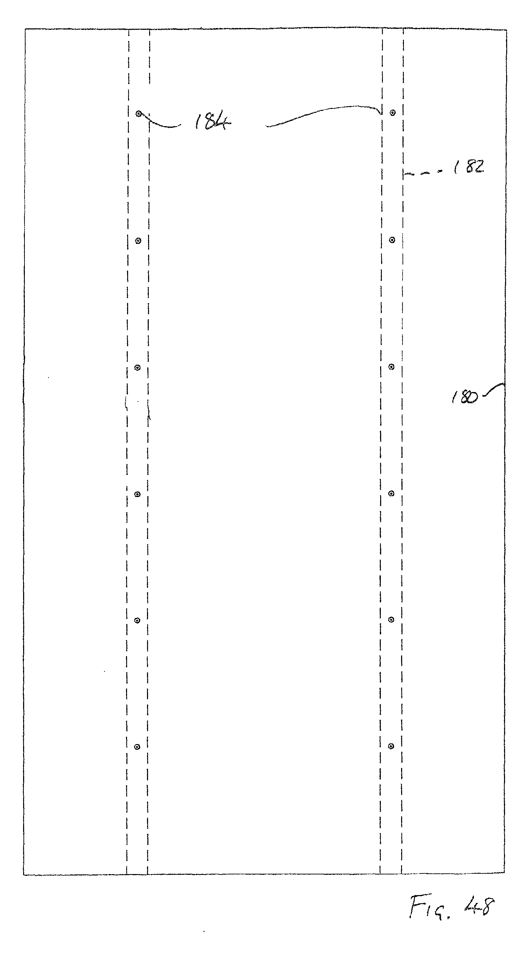

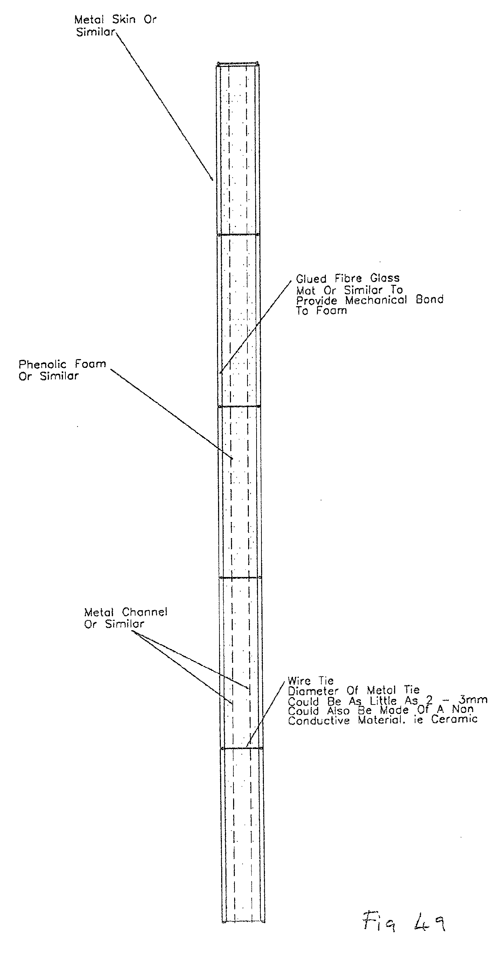

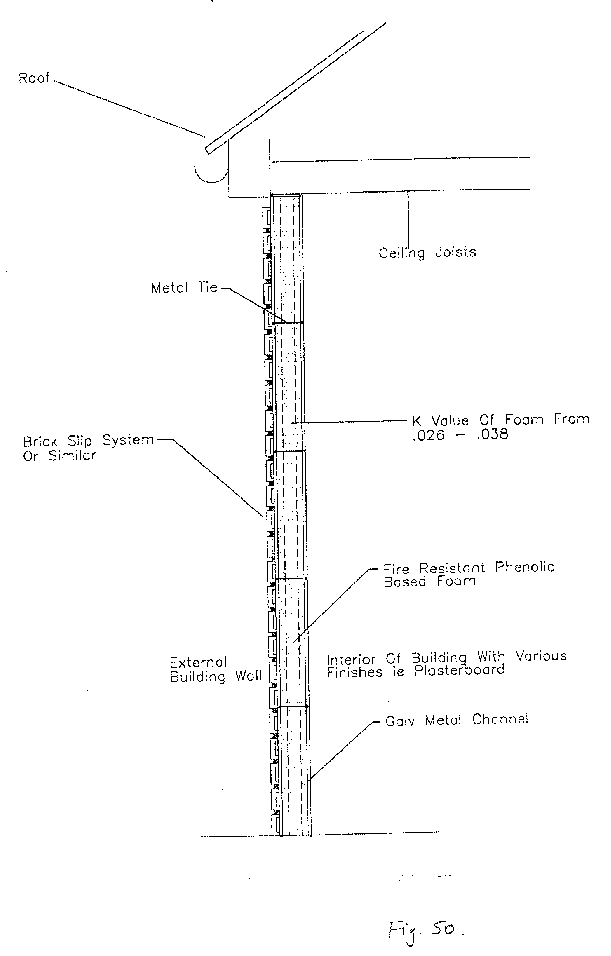

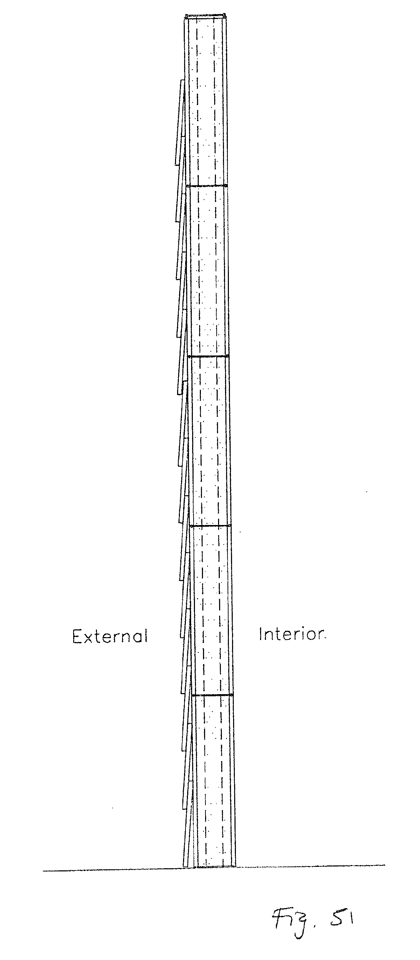

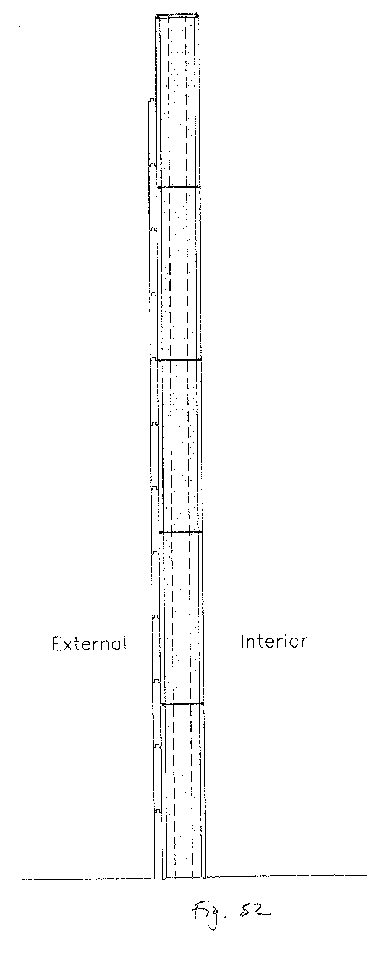

In figure 49, the panel 180 is shown in side elevation. The channels 182 and ties 17 join the opposite surfaces of the panels together. That produces a stable structure capable of carrying a load. Figure 50 illustrates the panel 180 in a building with a facia of brick and supporting an imposed load. Alternative surface finishes may be applied as shown in figures 51 and 52.

In a private fire test of a fire resistant panel it was found that the foam was emitting heat (glowing) up to 12 hours after the extreme heat source was removed. This phenomina is known as "punking" can occur. Punking can allow combustion to occur/continue when the heat source is removed.

According to another aspect of the invention there is provided a fire resistant foam prone to punking, wherein the foam has an additive to reduce or eliminate punking. Preferably, the fire resistant foam with the additive is employed in the fire resistant panel, block, barrier or the like described hereinabove.
A Preferred additive is Diethylethylphosphonate (DEEP). This improves punking to a level where it doe not substantially affect fire performance of the panel. Most preferably a compound called Ammonium Polyphosphate is added to the foam, preferably as an alternative.

## Claims

1. A fire resistant panel, wherein the panel comprises a metal layer, adhesion means on the metal layer, a mechanical interlocking section on the adhesion means and a fire resistant foam section on the mechanical interlocking section.

2. A fire resistant panel according to claim 1, wherein the panel is thermally insulating.

3. A fire resistant panel according to any preceding claim, wherein the mechanical interlocking section forms a buffer between the foam and the metal layer which prevents acidic chemicals of the foam reacting with the metal layer, so adhesive will continue to work effectively.

4. A fire resistant panel according to any preceding claim, wherein the metal is a sheet metal.

5. A fire resistant panel according claim 4, wherein the sheet metal is sheet steel.

6. A fire resistant panel according to any preceding claim, wherein the fire resistant foam comprises a phenolic-resin based foam.

7. A fire resistant panel according to any preceding claim, wherein the panel comprises one or more further metal layers.

8. A fire resistant panel according to claim 7, wherein the panel comprises one further metal layer,and the first and second metal layers are arranged to sandwich the foam.

9. A fire resistant panel according to any preceding claim, wherein the mechanical interlocking section is a fibrous material or comprises glass fibre or fabric or the like.

10. A thermally-insulating and fire-resistant panel, wherein the panel comprises a metal layer, adhesion means on the metal layer, a mechanical interlocking section on the adhesion means and a fire resistant foam section on the mechanical interlocking section.

11. A thermally insulating and fire resistant panel according to any preceding claim, comprising a series of panels to form a barrier.

12. A thermally insulating and fire resistant barrier according to claim 11, wherein at least one panel of the barrier comprises a tongue section and another panel of the barrier comprises a groove section, and the complimentary tongue and groove sections are engaged and a mechanical fixing element is positioned through part of the engagement of the tongue and groove sections to prevent disengagement.

13. A thermally insulating and fire resistant barrier according to claim 12, wherein the joint is designed so that the mechanical fixing element is hidden.

14. A method of making a fire resistant panel comprising, providing a metal layer, applying adhesive on a side of the metal layer, and arranging a mechanical interlocking section on the adhesive on the metal layer, and applying a fire resistant foam to the mechanical interlocking section side of the metal layer.

15. A fire resistant structural block, wherein the block comprises a fire resistant foam portion, the foam portion being the only stress bearing part of the block.

16. An apparatus for applying a mechanical interlocking section to a metal layer, the apparatus comprising conveying means for conveying a metal layer, adhesive application means for applying a mechanical interlocking section onto the metal layer, pressing means to press a mechanical interlocking section into the adhesive, and a heating means to cure the adhesive.

17. A method of making a part for use in accordance with any of claims 1 to 10, comprising,
providing a metal layer,
applying an adhesion means such as a two-part Poly-Urethane adhesive or the like to a surface of the layer, and
applying a glass fibre or the like to the adhesive.

18. A method of foaming a panel in accordance with any of claims 1 to 10, comprising providing a mould of a length and width substantially greater than the depth, arranging the mould so that length and width thereof extend substantially horizontally and introducing foam into the mould midway along the width or length thereof.

19. A mould suitable for use in making a fire resistant panel using fire resistant foam, the mould comprising two side rails and two end rails which form a rectangular mould, one side rail having an opening arrangement for injecting foam, at least one of the end rails having one or more vent holes, the vent holes having an integrally formed means arranged to allow expulsion of gases associated with fire resistant foam therethrough while preventing passage of foam therethrough.

20. A press comprising one or more plate pairs, each plate pair comprising two spaced apart horizontal plates and means for maintaining the upper plate of each pair at a higher temperature and the lower plate of each part at a lower temperature.

21. A fire resistant panel, wherein the panel comprises first and second metal layers sandwiching a fire resistant foam section, and a connector means comprising an element non-combustible in a fire.

22. A fire door suitable for a food store, wherein the fire door comprises a panel made in accordance with any of claims 1 to 10.

23. A ceiling panel, wherein the ceiling panel comprises a panel made in accordance with any of claims 1 to 10

24. A fire resistant panel having opposite surfaces and a fire resistant material therebetween, the surfaces each carrying a member extending from the base thereof towards an upper part thereof, the members being joined together so as to secure structurally one surface to the other.
